# EUROPÄISCHE PATENTSCHRIFT

(11) **EP 1 153 714 B1**
(45) Veröffentlichungstag und Bekanntmachung des Hinweises auf die Patenterteilung: **23.03.2005**
(21) Anmeldenummer: 00109727.8
(22) Anmeldetag: 08.05.2000
(51) Int. Cl.: B26D 7/06, B65G 15/42

(54) **Einrichtung zum Transport von Backwaren**
Apparatus for advancing baked goods
Dispositif pour déplacer en avancement des produits de boulangerie

(43) Veröffentlichungstag der Anmeldung: 14.11.2001
(73) Patentinhaber: Krumbein, Wolfgang, 99891 Tabarz (DE)
(72) Erfinder: Krumbein, Wolfgang, 99891 Tabarz (DE)
(74) Vertreter: Liedtke, Klaus, Dr.

(56) Entgegenhaltungen:
- EP-A- 0 412 835
- EP-A- 0 556 497
- WO-A-93/07999
- DE-A- 2 261 115
- DE-A- 3 938 543
- DE-B- 1 194 320
- DE-B- 1 241 346
- FR-A- 2 285 317
- US-A- 1 937 049
- US-A- 3 237 757
- US-A- 5 320 017
- PATENT ABSTRACTS OF JAPAN vol. 009, no. 313 (M-437), 10. Dezember 1985 (1985-12-10) & JP 60 148808 A (KEWPIE KK), 6. August 1985 (1985-08-06)
- PATENT ABSTRACTS OF JAPAN vol. 006, no. 080 (M-129), 19. Mai 1982 (1982-05-19) & JP 57 019206 A (EGUCHI MENKI SEISAKUSHO:KK), 1. Februar 1982 (1982-02-01)

## Beschreibung

Die Erfindung betrifft eine Einrichtung zum Transport von Backwaren, insbesondere Brötchen oder Brezeln, zu einer Schneideinrichtung für die Backwaren, umfassend zwei übereinander angeordnete Transportbänder, zwischen denen die Backwaren einklemmbar transportierbar sind (siehe z.B. WO-A-93 07999).

Eine Einrichtung der eingangs genannten Art ist aus der WO 98/07552 bekannt. Hierbei sind zwei übereinander angeordnete sich gegenläufig bewegende Transportbänder bekannt, die zwischen den Transportbändern eingeklemmte Brötchen zu einer Schneideinrichtung führen, durch welche dann die Brötchen halbiert werden.

Es hat sich nun herausgestellt, dass die Brötchen naturgemäß nicht immer von genau identischer Größe sind. Es ist durchaus möglich, dass die Brötchen Höhenunterschiede von mehreren Millimetern aufweisen. Um die Brötchen dennoch sicher zur Schneideinrichtung bzw. durch die Schneideinrichtung hindurch transportieren zu können, ist daher erforderlich, dass der Anpressdruck der beiden Transportbänder auf das jeweilige Brötchen, d. h. auf das Brötchen mit der kleinsten Höhe eingestellt wird. Die Folge hiervon ist, dass zwangsweise die großen Brötchen gequetscht werden. Inbesondere bei "cross" gebackenen Brötchen hat dies dann zur Folge, dass diese Brötchen splittern. Ein derart gesplittertes Brötchen ist vom optischen Eindruck her nur noch sehr schwer zu verkaufen.

Der Erfindung liegt daher die Aufgabe zugrunde, eine Einrichtung der eingangs genannten Art bereitzustellen, mit der Brötchen unterschiedlicher Höhe sicher transportiert und geschnitten werden können, ohne dass diese übermäßig während des Transportes bzw. des Schneidevorganges gequetscht werden.

Die Aufgabe wird erfindungsgemäß durch eine Einrichtung mit den Merkmalen des Anspruchs 1 gelöst. Durch die Anordnung elastisch nachgiebiger Elemente wird erreicht, dass das Brötchen derart fixiert zwischen den beiden Transportbändern gehalten wird, dass ein Zerdrücken des Brötchens nicht erfolgt.

Zur Bildung der Schlaufen werden Bänder aus elastisch nachgiebigem Material verwendet, die unter Bildung einzelner Schlaufen auf der Bandoberfläche angeordnet sind. Dies deshalb, weil durch diese Bänder die entsprechenden Schlaufen bzw. elastisch nachgiebigen Elemente in einfacher und preiswerter Form auf ein derartiges Transportband aufgebracht werden können.

Nach einem besonders vorteilhaften Merkmal ist vorgesehen, dass die elastisch nachgiebigen Elemente seitlich versetzt zueinander auf der Bandoberfläche angeordnet sind, um durch diesen seitlichen Versatz der einzelnen Elemente eine Führung der Brötchen in Längsrichtung des Transportbandes zu ermöglichen. Das heißt, dass durch die seitlich versetzte Anordnung der elastisch nachgiebigen Elemente zueinander die durch die Transportbänder geführten Brötchen seitlich nicht ausbrechen können. Dies ist insbesondere von Wichtigkeit, wenn man bedenkt, dass während des Schneidvorganges, der durch horizontal angeordnete Messer erfolgt, auf die Brötchen eine Horizentralkraft ausgeübt wird. Diese von der Schneideinrichtung auf die Brötchen während des Schneidvorganges ausgeübte.Horizontalkraft kann durch die elastisch nachgiebigen Elemente auf dem Transportband aufgefangen werden.

Nach einem weiteren Merkmal der Erfindung ist vorgesehen, dass die elastisch nachgiebigen Elemente auf der Oberfläche des Transportbandes, das insbesondere aus lebensmittelechtem Kunststoff hergestellt ist, aufgeklebt sind.

Nach einem weiteren, vorteilhaften Merkmal der Erfindung ist vorgesehen, das obere Transportband mit den elastisch nachgiebigen Elementen zu versehen. Es hat sich nämlich herausgestellt, dass insbesondere hierdurch eine Führung des Brötchens sowohl in Längsrichtung als auch in Querrichtung des Transportbandes ermöglicht wird, ohne dass das Brötchen während des Schneid- oder Transportvorganges beschädigt wird.

Anhand der Zeichnungen wird die Erfindung nachstehend beispielhaft näher erläutert.

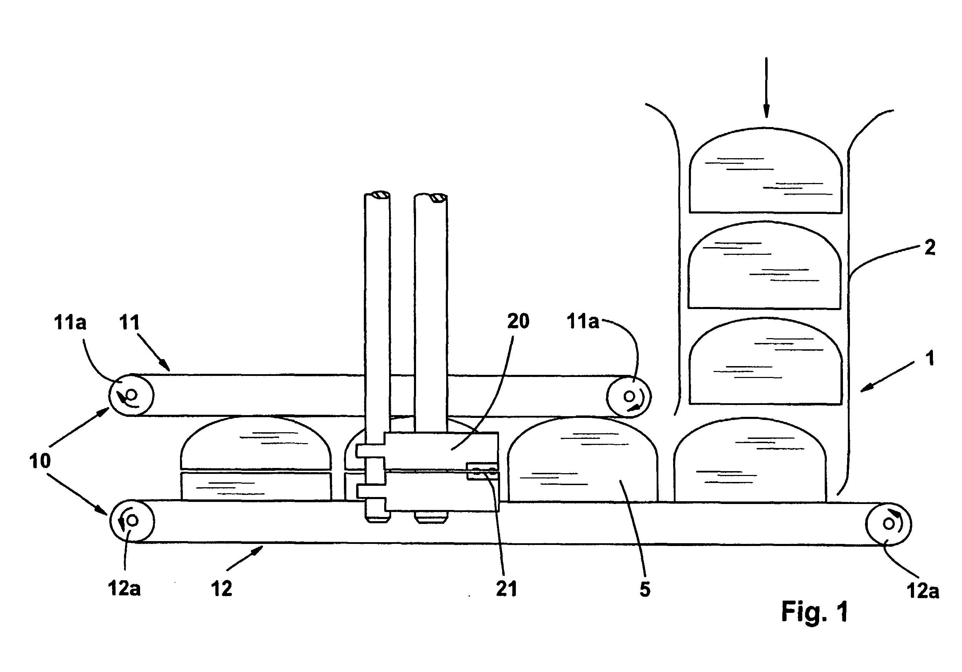

- Figur 1: zeigt die Brötchen-Schneideinrichtung in schematischer Darstellung;
- Figur 2: zeigt die Ausbildung eines Transportbandes gemäß Figur 1 mit schlaufenförmig angeordneten Bändern;
- Figur 3: zeigt ein Transportband mit Schaumstoffklötzchen auf der Bandoberseite;
- Figur 4: zeigt ein Transportband mit Laschen aus elastisch nachgiebigem Material auf der Bandoberseite.

Die insgesamt mit 1 bezeichnete Brötchen-Schneideinrichtung zeichnet sich durch eine insgesamt mit 10 bezeichnete Vorrichtung zum Transport der Brötchen 5 aus. Hierbei zeigt die Brötchen-Schneidvorrichtung eine Zufuhr 2, durch die Brötchen 5 in den Raum zwischen den beiden Transportbändern 11 und 12 geführt werden. Im Bereich zwischen den beiden Transportbändern befindet sich die insgesamt mit 20 bezeichnete Schneideinrichtung. Die mit 20 bezeichnete Schneideinrichtung zeigt horizontal verlaufende Messer 21 zum Schneiden der Brötchen 5.

Gegenstand der Erfindung ist nunmehr die Transportvorrichtung 10, bestehend aus den beiden Transportbändern 11 und 12. Die Transportbänder 11 und 12 der Transporteinrichtung 10 weisen jeweils zwei Wellen 11a, 12a auf, von denen wenigstens eine antreibbar ist.

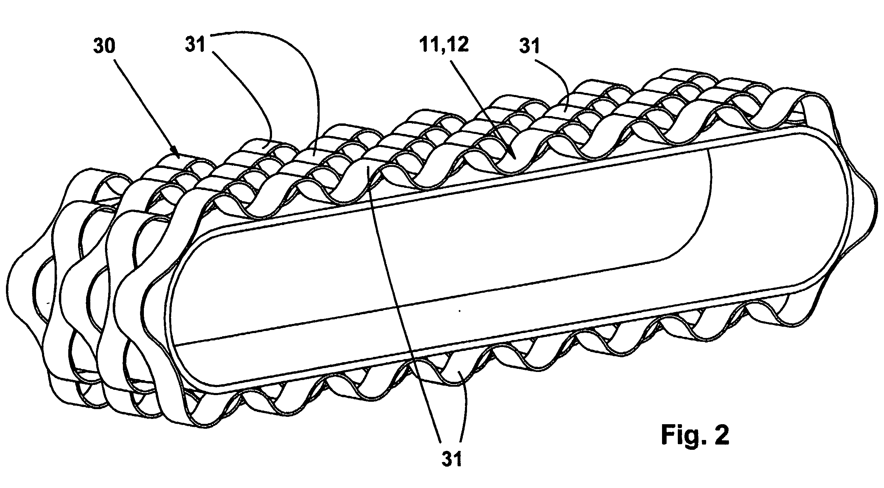

Die Ausbildung des einzelnen Transportbandes 11, 12 ergibt sich aus Figur 2. Dieses Transportband 11, 12 weist auf seiner Oberseite mehrere Bänder 30 auf, die parallel zueinander unter Bildung einzelner Schlaufen 31 auf dem Band aufgeklebt sind. Die Anordnung der Schlaufen 31 ist nunmehr derart, dass diese jeweils seitlich versetzt aneinander auf dem Band 20 angeordnet sind. Seitlich versetzt bedeutet hierbei, dass die Schlaufenwelle eines Bandes neben dem Schlaufental des benachbarten, parallel dazu verlaufenden Bandes angeordnet ist. Hierdurch wird erreicht, dass durch dieses Transportband die Brötchen seitlich geführt werden.

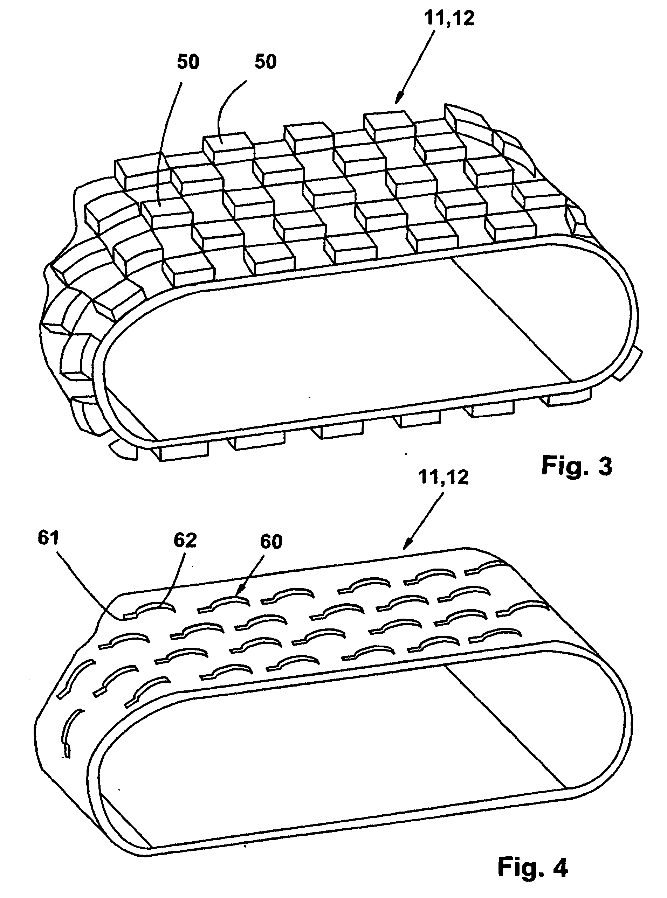

Bei der Ausbildung des Transportbandes gemäß Figur 3 sind auf der Bandoberfläche versetzt zueinander angeordnete Schaumstoffklötzchen 50 vorgesehen.

Das Transportband gemäß Figur 4 zeigt einzelne, ebenfalls versetzt zueinander angeordnete Laschen 60. Die Laschen 60 zeigen Stege 61 zur Befestigung auf dem Band, an dem sich ein sichelförmiger Ansatz 62 als Lasche anschließt.

## Patentansprüche

1. Einrichtung (10) zum Transport von Backwaren (5), insbesondere Brötchen oder Brezeln, zu einer Schneidvorrichtung (20) für die Backwaren, umfassend zwei übereinander angeordnete Transportbänder (11, 12), zwischen denen die Backwaren (5) einklemmbar transportierbar sind, wobei mindestens ein Transportband (11, 12) auf seiner der Backware (5) zugewandten Oberfläche elastisch nachgiebige Elemente aufweist, **dadurch gekennzeichnet, dass** das Transportband (11, 12) auf seiner Oberseite mehrere Bänder (30) aufweist, die parallel zueinander unter Bildung einzelner Schlaufen (31) auf dem Band aufgeklebt sind.

2. Einrichtung nach Anspruch 1, **dadurch gekennzeichnet, dass** die Schlaufen (31) jeweils seitlich versetzt aneinander auf dem Band (11, 12) angeordnet sind.

3. Einrichtung nach Anspruch 1 oder 2, **dadurch gekennzeichnet, dass** die elastisch nachgiebigen Elemente auf der Bandoberfläche angeordnete Laschen (60) aus elastisch nachgiebigem Material sind.

4. Einrichtung nach Anspruch 1 oder 2, **dadurch gekennzeichnet, dass** die elastisch nachgiebigen Elemte auf der Bandoberfläche angeordnete Schlaufen (31) aus elastisch nachgiebigen Material sind.

5. Einrichtung nach Anspruch 4, **dadurch gekennzeichnet, dass** zur Bildung der Schlaufen (31) Bänder (30) aus elastisch nachgiebigen Material vorgesehen sind, die unter Bildung einzelner Schlaufen (31) auf der Bandoberfläche angeordnet sind.

6. Einrichtung nach einem der vorhergehenden Ansprüche, **dadurch gekennzeichnet, dass** die elastisch nachgiebigen Elemente (31, 50, 60) seitlich versetzt zueinander auf der Bandoberfläche angeordet sind.

7. Einrichtung nach einem der vorhergehenden Ansprüche, **dadurch gekennzeichnet, dass** das obere Transportband (11) die elastisch nachgiebigen Elemente (31, 50, 60) aufweist.

## Claims

1. Apparatus (10) for advancing baked goods (5), in particular buns or pretzels, to a cutting device (20) for the baked goods, comprising two conveyor belts (11, 12) being arranged on top of each other, between which the baked goods (5) are clampably advanceable, wherein at least one conveyor belt (11, 12) exhibits elastically flexible elements on its surface that is facing the baked goods (5), **characterized in that** the conveyor belt (11, 12) exhibits several ribbons (30) on its upside, which are glued onto the conveyor belt in parallel and forming single loops (31).

2. Apparatus according to claim 1, **characterized in that** the loops (31), respectively, are arranged on the conveyor belt (11, 12) laterally offset and adjacently.

3. Apparatus according to claim 1 or 2, **characterized in that** the elastically flexible elements are straps (60) from elastically flexible material arranged on the conveyor belt's s surface.

4. Apparatus according to claim 1 or 2, **characterized in that** the elastically flexible elements are loops (31) from elastically flexible material arranged on the conveyor belt's surface.

5. Apparatus according to claim 4, **characterized in that**, for forming the loops (31), ribbons (30) from elastically flexible material are provided, which are arranged on the conveyer belt's surface forming single loops (31).

6. Apparatus according to one of the preceding claims, **characterized in that** the elastically flexible elements (31, 50, 60) are arranged on the conveyor belt's surface laterally offset in relation to each other.

7. Apparatus according to one of the preceding claims, **characterized in that** the upper conveyor belt (11) exhibits the elastically flexible elements (31, 50, 60).

## Revendications

1. Dispositif (10) destiné à déplacer des produits de boulangerie (5), en particulier des petits pains ou des bretzels, vers un dispositif de coupe (20) pour produits de boulangerie et comprenant deux bandes transporteuses (11, 12) disposées l'une au-dessus de l'autre et entre lesquelles les produits de boulangerie (5) peuvent être maintenus et transportés, une bande transporteuse (11, 12) au minimum présentant sur sa surface dirigée vers le produit de boulangerie (5) des éléments à flexibilité élastique, **caractérisé en ce que** la bande transporteuse (11, 12) présente sur sa face supérieure plusieurs bandes (30) collées sur la bande parallèlement les unes par rapport aux autres en formant des boucles individuelles (31).

2. Dispositif suivant la revendication 1, **caractérisé en ce que** les boucles (31) sont disposées sur la bande (11, 12) les unes à côté des autres en étant à chaque fois décalées latéralement.

3. Dispositif selon la revendication 1 ou 2, **caractérisé en ce que** les éléments à flexibilité élastique sont des pattes (60) en matériau à flexibilité élastique disposées sur la face supérieure de la bande.

4. Dispositif selon la revendication 1 ou 2, **caractérisé en ce que** les éléments à flexibilité élastique sont des boucles (31) en matériau à flexibilité élastique disposées sur la face supérieure de la bande.

5. Dispositif suivant la revendication 4, **caractérisé en ce que** des bandes (30) en matériau à flexibilité élastique sont prévues pour former les boucles (31), ces bandes étant disposées sur la surface supérieure de la bande en formant des boucles individuelles (31).

6. Dispositif suivant l'une des revendications précédentes, **caractérisé en ce que** les éléments (31, 50, 60) à flexibilité élastique sont disposés sur la face supérieure de la bande en étant décalés latéralement les uns par rapports aux autres.

7. Dispositif suivant l'une des revendications précédentes, **caractérisé en ce que** la bande transporteuse supérieure (11) présente les éléments (31, 50, 60) à flexibilité élastique.
